# EUROPEAN PATENT APPLICATION

(11) **EP 4 407 922 A1**
(43) Date of publication of application: **31.07.2024**
(21) Application number: 23153912.3
(22) Date of filing: 30.01.2023
(51) Int. Cl.: H04L 9/00

(54) **COMPUTER-IMPLEMENTED METHOD FOR SHARING DIFFERENTIALLY PRIVATE RELIABILITY DATA IN AN IIOT INFRASTRUCTURE**

(71) Applicant: Siemens Aktiengesellschaft, 80333 München (DE)
(72) Inventor: Joanni, Andreas, 80337 München (DE)
(74) Representative: Siemens Patent Attorneys

(57) **Abstract**

The invention relates to a computer-implemented method for sharing differentially private reliability data in an IIoT infrastructure, wherein the IIoT infrastructure comprises a central computing device (10) and at least one local computing device (20), comprising the steps: a. Applying a differentially private algorithm on at least one processed input reliability data set solely once to add randomness to the at least one processed input reliability data set by the central computing device (10); wherein the application is performed after processing at least one input reliability data set into the at least one processed input reliability data set by the central computing device (10); wherein the central computing device (10) solely has access to the at least one input reliability data set; and providing the differentially private reliability data by the central computing device (10);or b.

Applying the differentially private algorithm on at least one individual input reliability data set to add randomness to the at least one individual input reliability data set by the at least one local computing device (20); wherein the application is performed before processing the at least one individual input reliability data set into the at least one processed input reliability data set by the central computing device (10); wherein the at least one local computing device (20) solely has access to the at least one individual input reliability data set; and providing the differentially private reliability data by the at least one local computing device (20).

Further, the invention relates to a corresponding computer program product and IIoT infrastructure.

## Description

### 1. Technical field

The present invention relates to a computer-implemented method for sharing differentially private reliability data in an IIoT infrastructure. Further, the invention relates to a corresponding computer program product and IIoT infrastructure.

### 2. Prior art

Currently there is a trend of digitalization in the industry domain. Hence, e.g., a manufacturing process for a product may be digitally controlled. For describing several facets of this trend the term "Industry 4.0" (in German: "Industrie 4.0") is commonly used. It has become not only a major part of today's industry, but it also drives the business in many industrial domains.

A core facet underlying Industry 4.0 and the digitalization is the connectivity of different devices to the Internet. This results in the so called IoT (Internet of Things) used as a hypernym for a network of heterogeneous devices - e.g. IoT-devices (Internet of Things devices) - connected to and through the Internet. Thus, devices and systems participating, e.g., in manufacturing processes or end products of such manufacturing processes may be connected to cloud platforms or the Internet, e.g., for connecting and/or controlling them. Based on this, several applications, tasks or services may be facilitated across different domains such as: preventive maintenance, real-time rescheduling of production devices, spare parts management, load prediction, real-time production monitoring, or pay-per-use billing.

The data collection and data processing for the Industrial Internet of Things (IIoT) are gaining in importance. The collected and processed data are often related to reliability in a wider sense, in which case the data can be abbreviated with the term "reliability data".

For example, the reliability data can be sensor information, such as temperature and vibration. The sensor information can be important for tracking the health state of components. The components can be technical components of a technical system, such as a high-availability system, preferably an industrial plant. These technical components are monitored.

Moreover, for example, the reliability data can be information with regard to times to failure or reaching a degradation threshold, or down times of the monitored components.

The exemplary reliability data can be analyzed and used e.g. for optimizing the design of the technical system. In more detail, it can be inferred from the reliability data that a higher level of redundancy of a production system as technical system is needed to reach given availability targets. Moreover, the exemplary reliability data can be e.g. used for improving the logistics for maintenance operations, such as setting a just-in-time logistic support that reduces the number of stored spares.

The processing of reliability data can be performed on various levels, such as field device level, edge device level or in the cloud.

However, usually, the reliability data comprises at least in part sensitive data. According to which, the reliability data is often considered as confidential by companies or partners that contribute to the IIoT, wherein they are the owners or operators of the monitored technical components.

There are various reasons for classifying the data as confidential, such as:
- the failure times may reveal that the monitored technical components were operated outside of the specifications stated by the manufacturer of the technical components. Hence, the owners or operators of the monitored technical components fear that they lose warranty rights.
- the failure times or the down times of the monitored technical components may reveal information on the cost structure of a manufacturer, assets or information on the operating and environmental conditions.
- the failure times or the down times of the monitored technical components may reveal information on the plant utilization, number of maintenance personnel or number of spares in stock.

Current prior art approaches are susceptible to reconstruction attacks, especially with increasing computing power available and most often also have drawbacks in an IIoT context. The currently available approaches cannot ensure the protection of the confidential information under all circumstances when storing and processing the reliability data in IIoT applications and publishing the results. Furthermore, implementation of cryptographic measures for the protection of the confidential information may require high computing power and may be time-consuming.

As a consequence, the companies or the partners that contribute to the IIoT are reluctant or even refuse the sharing and collection of their reliability data because the data is considered confidential and it may be reconstructed by an attacker even after processing. This, in turn, leads to less amount of reliability data and therefore also increased difficulties in taking advantage of the reliability data in IIoT applications.

It is therefore an objective of the invention to provide a computer-implemented method for sharing differentially private reliability data in an IIoT infrastructure, which is more efficient and more reliable.

### 3. Summary of the invention

This problem is according to one aspect of the invention solved by a computer-implemented method for sharing differentially private reliability data in an IIoT infrastructure, wherein the IIoT infrastructure comprises a central computing device and at least one local computing device, comprising the steps:
a. Applying a differentially private algorithm on at least one processed input reliability data set solely once to add randomness to the at least one processed input reliability data set by the central computing device; wherein
   the application is performed after processing at least one input reliability data set into the at least one processed input reliability data set by the central computing device; wherein
   the central computing device solely has access to the at least one input reliability data set; and providing the differentially private reliability data
   by the central computing device; or
b. Applying the differentially private algorithm on at least one individual input reliability data set to add
   randomness to the at least one individual input reliability data set by the at least one local computing device; wherein
   the application is performed before processing the at least one individual input reliability data set into the at least one processed input reliability data set by the central computing device; wherein
   the at least one local computing device solely has access to the at least one individual input reliability data set; and
   providing the differentially private reliability data by the at least one local computing device.

Accordingly, the invention is directed to a computer-implemented method for sharing the differentially private reliability data in the IIoT infrastructure. The IIoT infrastructure comprises distinct computing devices, namely one central computing device and one or more local computing devices. The computing devices share the reliability data in the IIoT infrastructure.

The differentially private algorithm is executed on at least one computing device in the IIoT computing infrastructure, for anonymization of the processed reliability data set in the context of IIoT applications.

Thereby, the differentially private algorithm is applied on at least one processed input reliability data set by the central computing device. In other words, the algorithm is executed on the central computing device. Accordingly, the at least one input reliability data set is already processed. The central computing device has access to the at least one input reliability data set.

Alternatively, the differentially private algorithm is applied on at least one individual input reliability data set by the one or more local computing devices. In other words, the algorithm is executed on the local computing device. Accordingly, the input reliability data set is not processed, but unprocessed. The local computing device has access to the input reliability data set.

Importantly, the at least one individual input reliability data set from the one or more local computing devices is processed into the at least one processed input reliability data set by the central computing device in both cases. Hence, in other words, the central computing device is configured for processing the data. The processing is not performed on the local computing devices.

According to which, the central computing device can be equally referred to as central processing or processing device. The at least one processed input reliability data set can be designed as statistic, such as a sum or average value, or a combination thereof. In a reliability context, the resulting statistic is often used as an estimated parameter of a probability distribution, e.g., the estimated constant failure rate of an exponential distribution. In other words, the individual input reliability data set is aggregated during processing.

The present invention ensures that sensitive reliability data is sufficiently protected by adding only as much randomness to the reliability data as necessary, while meaningful evaluations are still possible.

The advantage is that more companies or partners that contribute to the IIoT are willing to share their reliability data from their computing devices, such as field devices, for reliability data evaluations. This improves the design, the operation and the maintenance strategies due to better insights and prognoses, and thus improving the benefit for many or all stakeholders. This is highly relevant for several technical fields, including the industry domain and Smart Infrastructure.

In a further aspect the central computing device is a smart edge device.

In a further aspect the at least one local computing device is a smart IoT device or a IoT gateway.

In a further aspect the at least one local computing device is a plurality of local devices and the application of the differentially private algorithm is performed on each individual input reliability data set of the respective local computing device to add randomness to each individual input reliability data set by each local computing device of the plurality of local computing devices.

In a further aspect, the method further comprises
- outputting the differentially private reliability data and/or any other related notification;
- storing the differentially private reliability data and/or any other related notification;
- analyzing the differentially private reliability data and/or any other related notification;
- evaluating the differentially private reliability data and/or any other related notification;
- displaying the differentially private reliability data and/or any other related notification;
- transmitting the differentially private reliability data and/or any other related notification to a computing unit; and/or
- triggering at least one measure with regard to the differentially private reliability data.

Accordingly, the input data, data of intermediate method steps and/or resulting output data can be further handled. The output data is in particular the differentially private reliability data. The differentially private reliability data can be e.g. enriched with further data or information. One or more measures can be performed. The measure can be equally referred to as action or method step.

These measures can be performed by one or more technical units, such as computing unit or robot unit. The measures can be performed gradually or simultaneously. Measures include e.g. storing and processing steps. The advantage is that appropriate measures can be performed in a timely manner.

According to one preferred use case, the differentially private reliability data is transmitted to a computing device to be published. The published data can be used e.g. for optimizing maintenance operations. In more detail, it can be used to provide the optimal number of spares at the right locations in order to reduce down times of technical systems after failures of components, and at the same time ensuring that no capital is spent on unnecessary spares.

According to one further preferred use case, the differentially private reliability data is analyzed and used e.g. for optimizing the design of the technical system, as mentioned further above. In more detail, it can be derived that a higher level of redundancy of a production system as technical system is needed to reach given availability targets.

According to which, the IIoT infrastructure, any other computing device of the IIoT infrastructure or technical system, such as industrial plant, can be adapted or optimized depending on the analysis result. Additionally or alternatively, the industrial plant can be controlled automatically depending on the analysis result or evaluation result of the differentially private reliability data.

A further aspect of the invention is a computer program product directly loadable into an internal memory of a computer, comprising software code portions for performing the steps according to any one of the preceding claims when said computer program product is running on a computer.

A further aspect of the invention is a IIoT infrastructure for sharing differentially private reliability data in an IIoT infrastructure.

### 4. Short description of the drawings

In the following detailed description, presently preferred embodiments of the invention are further described with reference to the following figures:

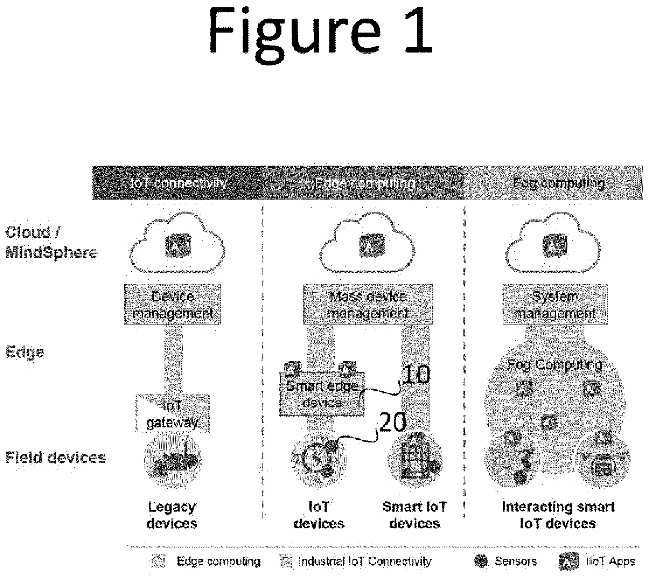

- Fig. 1: shows a schematic diagram of the IIoT infrastructure according to prior art.

### 5. Detailed description of preferred embodiments

Differential privacy is a concept that ensures that private information in a statistical database is sufficiently protected by adding only as much randomness to the data as necessary, while meaningful evaluations are still possible. A processing (or evaluation) step satisfies differential privacy if its output is basically the same if one changes the data of one individual. This is done by adding randomness (noise) to the processing result or to the individual reliability data, depending on the chosen model (central or local).

The suitable degree of randomness depends on the processing step and the limit on the greatest possible information gain by the attacker. The interesting feature of the differential privacy concept is that this information gain can be quantified based on a rigorous theoretical framework. In addition, there is no need for attack modeling because it does not matter what the attacker knows about the data.

In principle, both the central model and the local model of differential privacy are applicable for reliability data evaluation in the context IIoT applications:
In the central model, a central processing device, such as a smart edge device (see Figure 1), has access to the actual reliability data set. The appropriate randomness as prescribed by the differentially private algorithm is only applied once after the processing step, and the result can then be shared with other parties.

This central model has the advantage of higher accuracy of the result because less randomness is required to achieve sufficient protection. The drawback is that the processing device must be trustworthy, especially because all the data is collected in one place.

In the local model, the central processing device, such as a smart edge device, does not have access to the real data set. Instead, the appropriate randomness as prescribed by the differentially private algorithm is applied by every individual data source of the reliability data set, such as a smart IoT device or IoT gateway (see Figure 1), before sending the data to the central processing device for processing.

This way the processing device does not have to be trustworthy. The drawback is that the total randomness is larger (although still only as large as required), and the result of the processing step is, consequently, less accurate.

As an example of a simple data processing step for reliability data, consider a complete data set of exponentially distributed failure times t1, t2, ..., tn. The maximum likelihood estimator of the failure rate parameter is equal to the number of failure times n, divided by the sum of the failure times t1, t2, ..., tn (also called total time on test).

Hence, the central processing device, such as a smart edge device, performs the summation of the failure times (possibly after clamping the values) as well as the division operation.

In the central model, an appropriately distributed random variable is added to the sum by the trustworthy central processing device before sharing the result of the processing step.

In the local model, appropriately distributed random variables are added to each of the individual failure times collected by smart IoT devices (possibly after clamping), before sending the resulting failure times to the (not necessarily trustworthy) smart edge device for processing.

Clamping of the failure times is not very much of a problem for reliability data, as outliers would typically be excluded from a reliability analysis anyway.

In both cases, with a differentially private algorithm an attacker would not be able to make useful inferences regarding an individual failure time from the estimated failure rate parameter, even if all other failure times in the data set were known to the attacker.

## Claims

1. Computer-implemented method for sharing differentially private reliability data in an IIoT infrastructure, wherein the IIoT infrastructure comprises a central computing device (10) and at least one local computing device (20), comprising the steps:
a. Applying a differentially private algorithm on at least one processed input reliability data set solely once to add randomness to the at least one processed input reliability data set by the central computing device (10); wherein
the application is performed after processing at least one input reliability data set into the at least one processed input reliability data set by the central computing device (10); wherein
the central computing device (10) solely has access to the at least one input reliability data set; and providing the differentially private reliability data by the central computing device (10); or
b. Applying the differentially private algorithm on at least one individual input reliability data set to add randomness to the at least one individual input reliability data set by the at least one local computing device (20); wherein
the application is performed before processing the at least one individual input reliability data set into the at least one processed input reliability data set by the central computing device (10); wherein
the at least one local computing device (20) solely has access to the at least one individual input reliability data set; and
providing the differentially private reliability data by the at least one local computing device (20) .

2. Computer-implemented method according to claim 1, wherein the central computing device (10) is a smart edge device.

3. Computer-implemented method according to claim 1 or claim 2, wherein the at least one local computing device (20) is a smart IoT device or a IoT gateway.

4. Computer-implemented method according to any of the preceding claims, wherein the at least one local computing device (20) is a plurality of local devices and
the application of the differentially private algorithm is performed on each individual input reliability data set of the respective local computing device (20) to add randomness to each individual input reliability data set by each local computing device (20) of the plurality of local computing devices.

5. Computer-implemented method according to any of the preceding claims, further comprising
- outputting the differentially private reliability data and/or any other related notification;
- storing the differentially private reliability data and/or any other related notification;
- analyzing the differentially private reliability data and/or any other related notification;
- evaluating the differentially private reliability data and/or any other related notification;
- displaying the differentially private reliability data and/or any other related notification;
- transmitting the differentially private reliability data and/or any other related notification to a computing unit; and/or
- triggering at least one measure with regard to the differentially private reliability data.

6. A computer program product directly loadable into an internal memory of a computer, comprising software code portions for performing the steps according to any one of the preceding claims when said computer program product is running on a computer.

7. IIoT infrastructure for sharing differentially private reliability data in an IIoT infrastructure, comprising
a. a central computing device (10), configured for applying a differentially private algorithm on at least one processed input reliability data set solely once to add randomness to the at least one processed input reliability data set; wherein the application is performed after processing the at least one input reliability data set into the at least one processed input reliability data set by the central computing device (10); wherein
the central computing device (10) solely has access to the at least one input reliability data set; and the central computing device (10) is configured for providing the differentially private reliability data; and/or
b. at least one local computing device (20), configured for applying the differentially private algorithm on at least one individual input reliability data set to add randomness to the at least one individual input reliability data set by the at least one local computing device (20); wherein
the application is performed before processing the at least one individual input reliability data set into the at least one processed input reliability data set by the central computing device (10); wherein
the at least one local computing device (20) solely has access to the at least one individual input reliability data set; and
the at least one local computing device (20) is configured for
providing the differentially private reliability data.
